# FASCICULE DE BREVET EUROPEEN

(11) **EP 1 328 749 B1**
(45) Date de publication et mention de la délivrance du brevet: **04.05.2005**
(21) Numéro de dépôt: 01982537.1
(22) Date de dépôt: 24.10.2001
(51) Int. Cl.: F16L 31/00, F16L 33/00, F16L 25/00

(54) **RACCORD HYDRAULIQUE FLEXIBLE**
FLEXIBLE FLÜSSIGKEITSKUPPLUNG
FLEXIBLE HYDRAULIC CONNECTION

(30) Priorité: 27.10.2000 FR 0013799
(43) Date de publication de la demande: 23.07.2003
(73) Titulaire: Société Etex de Recherches Techniques, S.E.R.T., 78540 Vernouillet (FR)
(72) Inventeur: GUILLAUD, Daniel, F-49300 Cholet (FR); PAUCOD, Jean-Michel, F-49280 la Seguiniere (FR); SERIN, Jean-Pierre, F-49340 Trementines (FR)
(74) Mandataire: Fosse, Danièle
(86) Numéro de dépôt international: PCT/FR2001/003297
(87) Numéro de publication internationale: WO 2002/035133

(56) Documents cités:
- EP-A- 0 440 566
- FR-A- 2 528 533
- FR-A- 2 712 371
- GB-A- 2 340 906

## Description

La présente invention concerne d'une manière générale les raccords hydrauliques et en particulier les raccords hydrauliques flexibles tels que les raccords d'assainissement, d'évacuation d'eaux sanitaires, usées, pluviales ou sorties de WC.

Ce type de raccord hydraulique flexible comporte donc au moins un tube déformable et au moins deux manchons ou emboîtures mâles ou femelles rigides de raccordement d'extrémité.

La présente invention concerne également un procédé de réalisation d'un tel raccord hydraulique.

En général, les raccords hydrauliques proposés pour le raccordement de canalisation hydrauliques sont entièrement réalisés en matériau rigide, par moulage de matériau plastique du type PVC, ABS, polyéthylène, polybutène ou polypropylène. Ils sont souvent réalisés sous forme de pièce individuelle du type coude, branchement, culotte, manchon, etc... La réalisation du raccordement nécessite alors l'utilisation d'une combinaison de pièces dans le cas d'un raccordement en angle lorsque celui-ci diffère des normes courantes, par exemple 30°, 45°, 60°, 90°, pour le rattrapage d'alignement. Dans le cas où on fait appel à des tronçons extrudés, le raccordement nécessite une manipulation délicate du matériel utilisé, comme par exemple le cintrage à chaud d'un tube droit afin d'amener celui-ci à la forme désirée.

De nombreux documents de l'art antérieur, comme par exemple EP-A-0 913 611, FR-A-2 787 548 ou FR-A-2 677 688, proposent différentes réalisations de raccords hydrauliques flexibles permettant une facilité d'exécution du raccordement et autorisant toutes les formes de raccordement. Ceux-ci ont cependant tous l'inconvénient d'être multi-blocs, c'est-à-dire que les manchons ne sont pas d'une seule pièce avec le tube déformable mais adaptables à celui-ci par vissage ou emboîtement mécanique. Cette conception induit donc des possibilités de fuites des effluents traversant le raccord au niveau de ce raccordement supplémentaire.

De plus, en général, le tube déformable est mono-matière et est généralement constitué d'une matière thermoplastique rigide ou semi-rigide présentant une structure mécanique déformable, comme par exemple une structure en accordéon. Cette structure apparaît généralement à l'intérieur du tube, la surface de celui-ci présentant donc des points d'accrochage ou aspérités pour les particules solides des effluents facilitant ainsi le bouchage du tube au niveau de la déformation et gênant la circulation du fluide.

Par ailleurs, les épaisseurs faibles de l'accordéon facilitent les dégradations des parois aux UV ainsi que les attaques par les produits chimiques véhiculés.

Du même type, on a proposé dans EP-A-440 566 un tube à emboîtement en matière plastique comportant un élément de tube présentant une surface extérieure annelée avec, dans sa surface extérieure, une succession d'ondes circulaires en relief séparées par des gorges en creux et dont l'une des extrémités comporte un embout creux pour venir sur une extrémité d'un autre tube. Ce tube est constitué d'une seule matière plastique présentant pour le tube, pour les annelures et pour l'embout creux les mêmes propriétés. Ce tube est fabriqué par injection et pressage sous forme selon un procédé d'extrusion classique d'une seule et même matière puis sur-injection de l'embout à une extrémité ce qui entraîne des manipulations du produit semi-fini et présente des coûts de production élevés.

Des tubes déformables en matériau thermoplastique souple ont également été proposés, mais ceux-ci présentent l'inconvénient de s'écraser et en tout état de cause de présenter un diamètre discontinu au niveau de la déformation ou coude imposé au raccord flexible. Un éventuel renforcement métallique a été proposé mais celui-ci s'avère d'une réalisation complexe et l'homogénéité du raccord s'affaiblit. En outre, un risque de corrosion et donc de fragilisation du raccord est à envisager.

Dans FR-A-2 712 371, on propose un raccord souple servant à relier deux éléments rigides. Ce raccord est constitué d'un tronçon de tube souple qui est annelé en spirale, ce qui lui permet de présenter sur sa face extérieure un filetage pouvant coopérer avec le filetage interne d'une bague servant en tant que moyens de fixation d'une extrémité du tube sur un raccord rigide. Le pas de vis du filetage interne de la bague est inférieur à celui du filetage externe du tube souple de telle sorte que lors du serrage de la bague, survient une compression de l'extrémité du tube améliorant l'étanchéité et le raccordement. Ce tube souple est obtenu par moulage de matériau plastique sur une armature rigide enroulée en spirale, tel qu'un fil rigide en matériau plastique, de manière à former un pas de vis. Il y a donc enrobage de l'armature rigide par le matériau plastique. Il est donc ici question de former un pas de vis qui soit suffisamment rigide pour permettre le vissage mais qui n'offre pas de grandes qualités de souplesse au tube ainsi réalisé du fait de l'enrobage de la spirale rigide métallique par le matériau plastique.

Le document GB-A-2 340 906 décrit un raccord pour tuyau comprenant un tube déformable et deux manchons rigides à emboîture femelle de raccordement d'extrémité dans lequel ledit tube déformable comprend une portion d'un tuyau en PVC doux à paroi intérieure lisse, souple, et des éléments de renfort en fil polyester enrobés dans le PVC formant le tuyau et un dispositif de maintien, entourant ladite portion de tuyau souple, constitué de PVC rigide formant au moins une spire hélicoïdale, lesdites matières plastiques étant chimiquement compatibles.

La présente invention a donc pour but de remédier à ces inconvénients en proposant un raccord hydraulique flexible tel que raccord d'évacuation d'eaux sanitaires, usées, pluviales ou pipes de WC, du type monobloc, présentant une très borine flexibilité ainsi qu'une excellente tenue mécanique et ayant donc une durée de vie plus importante.

A cet effet, conformément à l'invention, ce raccord hydraulique flexible, tel que raccord d'assainissement, d'évacuation d'eaux sanitaires, usées, pluviales ou sorties de WC, comprend au moins un tube déformable et au moins deux manchons rigides, à emboîture femelle ou bout mâle de raccordement d'extrémité, ledit tube déformable comprenant une portion d'un tuyau en matière plastique à paroi intérieure lisse, en matière thermoplastique souple ou en élastomère thermoplastique ou thermodurcissable, et un dispositif de maintien, entourant ladite portion de tuyau souple, constitué d'une matière plastique rigide et formé d'une pluralité d'anneaux ou d'au moins une spire hélicoïdale, lesdites matières plastiques étant choisies de manière à être chimiquement compatibles de façon à assurer un ancrage dudit dispositif de maintien dans la surface externe de ladite portion de tuyau souple, caractérisé en ce que l'ancrage dudit dispositif de maintien et éventuellement desdits manchons rigides à emboîture femelle ou bout mâle dans la surface externe de ladite portion du tuyau on matière plastique souple est réalisé par interfusion des matières plastiques souple et rigide utilisées dans une opération de co-injection dans un même moule.

On entend par matières plastiques chimiquement compatibles des matières polymériques plastiques et malléables à chaud présentant des structures chimiques ou des propriétés chimiques permettant l'obtention d'un mélange homogène de l'une dans l'autre sans risque de rejet, d'inclusion, d'encapsulation et de manière à obtenir préférentiellement un composite stable et homogène de type alliage.

Un tel raccord présente les avantages d'avoir une excellente flexibilité sans modification des caractéristiques d'écoulement du fluide du fait de la structure mécanique du dispositif de maintien qu'il comprend. Ce dispositif, du fait du choix des matériaux, est solidaire du tube déformable et l'ancrage réalisé favorise la longévité du raccord. Cette structure permet en outre d'éviter un bouchage excessif du raccord par l'absence de déformation de la surface interne du tube. Cette structure présente donc une résistance à l'écrasement du même ordre qu'un raccord rigide monobloc classique mais permet une diversité de formes de raccordement accrue. De plus, la nature du matériau constituant le tube déformable empêche tout type de fragilisation mécanique du type croquage. Le risque de fuite supplémentaire au niveau des manchons ou des emboîtures est également supprimé du fait du choix du type monobloc du raccord.

De préférence, lesdits manchons rigides à emboîture femelle ou bout mâle et ledit dispositif de maintien du raccord hydraulique sont constitués de la même matière plastique rigide.

Le choix d'un matériau identique pour les manchons ou emboîtures et le dispositif de maintien permet en outre de diminuer le nombre d'étapes nécessaire à la réalisation d'un tel raccord, c'est-à-dire d'en simplifier la fabrication et ainsi d'en diminuer les coûts de production.

Ce mode de réalisation de l'ancrage permet d'obtenir une excellente cohésion entre les deux matières plastiques utilisées d'une part du fait de leur compatibilité chimique et d'autre part du fait de la création à l'interface, par interpénétration des matières plastiques souples et rigides, d'un composite présentant un gradient de concentration de l'une des matières par rapport à l'autre, modèle qui répond parfaitement à la théorie chimique de l'adhésion de deux corps. Dans ce cas particulier, la compatibilité chimique des deux matières plastiques souple et rigide s'exprime par une bonne miscibilité à chaud.

Plus particulièrement, pour ce raccord hydraulique, la matière plastique souple est choisie, suivant le cas, parmi les élastomères thermodurcissables du type EPDM ou thermoplastiques, ou les thermoplastiques du type PVC souple ou polybutène souple, éventuellement mélangés avec des additifs.

De même, pour ce raccord hydraulique, la matière plastique rigide est plus particulièrement choisie, suivant le cas, parmi les thermoplastiques tels que le polypropylène, le polyéthylène, le PVC rigide, l'ABS ou le polybutène rigide, éventuellement mélangés avec des additifs.

En particulier, on choisira préférentiellement les matières plastiques rigides et souples compatibles entre elles parmi les matières citées ci-dessus, chacune de ces matières étant éventuellement mélangées avec des additifs.

Les additifs ci-dessus mentionnés seront incorporés dans la base utilisée pour la matière plastique de manière à ce que les propriétés de souplesse et de rigidité desdites matières ne soient pas fondamentalement modifiées. Généralement, les quantités utilisées sont de l'ordre de 1 à 15%. Ces additifs, couramment employés dans la fabrication de matières plastiques, peuvent être choisis parmi les agents anti-bloquants, les glissants, les agents anti-statiques, les agents anti-UV, les agents anti-buée, les modifiants choc, etc...

Un raccord hydraulique selon l'invention peut être doté de manchons rigides à emboîture femelle ou bout mâle à coller, ou en variante comprendre au moins un dispositif d'étanchéité inclus dans un manchon rigide à emboîture femelle. On parlera alors d'un raccord à joint.

En particulier, un dispositif d'étanchéité selon l'invention est un joint constitué majoritairement d'une matière plastique souple de même nature que celle constituant ladite portion du tuyau souple. Ce joint est alors co-injecté dans le moule en même temps que la portion de tuyau souple.

Dans cette configuration d'un raccord à joint, les manchons rigides à emboîture femelle ou bout mâle peuvent comprendre au moins un dispositif de guidage longitudinal permettant la limitation des contraintes mécaniques entre ledit dispositif d'étanchéité et le tube à raccorder. Un tel dispositif de limitation des contraintes mécaniques pourra en outre permettre de faciliter l'emmanchement du raccord au tube principal de canalisation.

Une fois encore, le choix du matériau peut être dicté par des impératifs de coûts et des facilités de réalisation d'un raccord selon l'invention, un choix restreint de matière limitant à la fois la complexité de l'élaboration d'un tel raccord par la diminution du nombre d'étapes nécessaire à sa fabrication ainsi que les frais engagés.

Un raccord hydraulique selon l'invention peut bien entendu comporter plusieurs tubes déformables et/ou plusieurs manchons rigides à emboîture femelle ou bout mâle de raccordement d'extrémité pour permettre le raccordement de plusieurs canalisation entre elles, par exemple pour le raccordement de plusieurs canalisations secondaires à un collecteur commun.

L'invention sera bien comprise à la lecture de la description suivante illustrée d'exemples de réalisation, en référence aux dessins annexés.

La figure 1 représente une vue en coupe longitudinale d'une réalisation particulière d'un raccord flexible, comprenant des manchons rigides à emboîture femelle à coller, conforme à l'invention, selon son axe principal encore appelé génératrice.

La figure 2 représente une vue partielle en coupe longitudinale d'une réalisation particulière d'un raccord flexible, comprenant un manchon rigide à emboîture femelle à joint, conforme à l'invention, selon son axe principal encore appelé génératrice.

La figure 3 représente une vue en coupe axiale du manchon du raccord présenté à la figure 2 selon l'axe A-A.

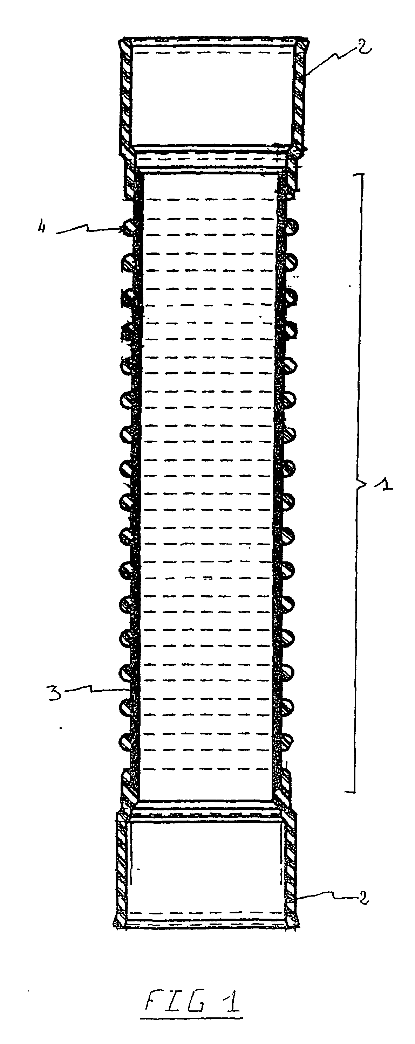

Dans la figure 1 est représenté un raccord hydraulique flexible, du type monobloc, comprenant un tube déformable 1 et deux manchons 2 rigides à emboîture femelle de raccordement d'extrémité dits à coller. Le tube déformable 1 comprend une portion 3 d'un tuyau souple à paroi intérieure lisse en thermoplastique du type PVC souple emmanché entre les deux manchons d'extrémité 2 par interfusion au moment de la réalisation du raccord. La portion 3 du tuyau souple est entourée d'une série d'anneaux 4 constitués d'un thermoplastique du type PVC rigide. Ces anneaux constituent un dispositif de maintien permettant principalement à la portion 3 de tuyau souple de conserver son diamètre quelles que soient les contraintes mécaniques imposées au raccord lors du raccordement. Les PVC souple et rigide sont, selon l'invention, chimiquement compatibles, c'est à dire qu'ils permettent un ancrage durable de la série d'anneaux 4 en PVC rigide dans la surface de la portion 3 du tuyau souple en PVC souple.

Une telle compatibilité s'exprime ici par une nature chimiquement similaire et une bonne miscibilité à chaud des deux matières. Ces caractéristiques s'avèrent être, dans cet exemple, la définition de la compatibilité chimique des matières thermoplastiques souple et rigide lors de la réalisation du raccord par un procédé de co-injection. On provoque alors, à la surface de la portion 3 du tuyau souple, une interfusion des deux PVC et la création d'un composite homogène.

Dans une variante d'exécution non représentée ici, la série d'anneaux 4 peut être remplacée par une spire hélicoïdale entourant la portion 3 du tuyau souple. Cette réalisation confère les mêmes avantages de maintien que ceux procurés par ladite série d'anneaux 4.

Avantageusement, les manchons 2 sont également réalisés en PVC rigide. Ce choix permet en outre de réduire les coûts financiers et le temps de réalisation d'un raccord selon l'invention et de favoriser, idéalement et de la même manière que précédemment développé, l'ancrage des manchons 2 aux extrémités de la portion 3 du tuyau souple. Dans ce mode de réalisation, l'utilisation du PVC rigide pour les emboîtures permet de mettre en oeuvre les techniques classiques de collage pour la réalisation des assemblages.

Dans la figure 2 est partiellement représenté un raccord hydraulique flexible, du type monobloc, comprenant un tube déformable 1 et un manchon 2 à emboîture femelle de raccordement d'extrémité dit à joints. Le tube déformable 1 comprend une portion 3 d'un tuyau souple à paroi intérieure lisse en thermoplastique souple, emmanché par interfusion au moment de la réalisation du raccord, dans au moins un manchon d'extrémité 2 en thermoplastique rigide. La portion 3 du tuyau souple est entourée d'une série d'anneaux 4 constitués également d'un thermoplastique rigide. Ces anneaux constituent un dispositif de maintien permettant principalement à la portion 3 de tuyau souple de conserver son diamètre quelles que soient les contraintes mécaniques imposées au raccord lors du raccordement. Ce raccord présente également, ancrés dans le manchon 2, un joint à lèvres 5 permettant d'obtenir une bonne étanchéité du raccordement au tube 7 adjacent. Le manchon 2 comprend également un dispositif de guidage longitudinal 6 constitué de quatre nervures en relief dans le manchon 2. Ce dispositif permet la limitation des contraintes mécaniques entre le joint 5 et le tube 7 à raccorder. Un tel dispositif de guidage longitudinal pourra en outre permettre de faciliter l'emmanchement du raccord au tube 7 de canalisation à raccorder

De la même manière que pour l'exemple présenté à la figure 1, les thermoplastiques souples et les thermoplastiques rigides sont, selon l'invention, chimiquement compatibles, et permettent un ancrage durable de la série d'anneaux 4 dans la surface de la portion 3 du tuyau souple. La compatibilité chimique s'exprime ici de la même manière que pour l'exemple de la figure 1. On pourrait citer comme exemple de réalisation la combinaison d'un polybutène souple et d'un polybutène rigide.

Il va de soi que des variantes de réalisation, par exemple en substituant la série d'anneaux 4 par une spire hélicoïdale, sont tout à fait envisageables.

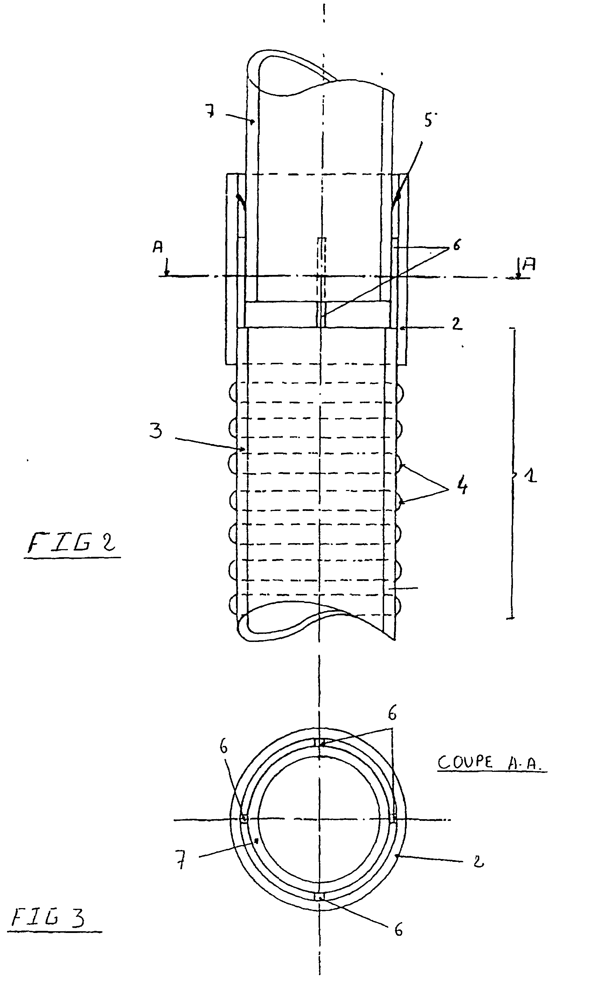

La figure 3 permet en outre de visualiser le positionnement des quatre nervures constituant le dispositif de guidage longitudinal 6. Dans cette représentation, celles-ci sont disposées selon un écart angulaire de 90°. Une toute autre configuration impliquant un nombre différent de nervures ou une disposition non géométrique est tout à fait envisageable mais non représentée ici. Cette représentation permet également de comprendre la coopération des différentes pièces intervenant lors du raccordement du tube 7 à raccorder au manchon 2.

La présente invention concerne également le mode de réalisation d'un raccord hydraulique selon l'invention.

Ce procédé de fabrication d'un raccord hydraulique flexible, tel que raccord d'assainissement, d'évacuation d'eaux sanitaires, usées, pluviales ou sorties de WC, selon l'invention, comprend la formation de ladite portion de tuyau souple ainsi que dudit dispositif de maintien et éventuellement desdits manchons rigides à emboîture femelle ou bout mâle de raccordement d'extrémité, dans un moule de co-injection par injection successive desdites matières plastiques chimiquement compatibles.

De manière avantageuse, la première injection permet de réaliser ledit dispositif de maintien ainsi qu'éventuellement simultanément lesdits manchons rigides à emboîture femelle ou bout mâle et la seconde injection permet de réaliser ladite portion dudit tuyau souple.

En particulier, on injecte au moins un dispositif d'étanchéité solidaire d'un manchon rigide à emboîture femelle simultanément à ladite portion dudit tuyau souple.

## Revendications

1. Raccord hydraulique flexible, tel que raccord d'assainissement d'évacuation d'eaux sanitaires, usées, pluviales ou sorties de WC, comprenant au moins un tube déformable (1) et au moins deux manchons rigides (2) à emboîture femelle ou bout mâle de raccordement d'extrémité, ledit tube déformable (1) comprenant une portion (3) d'un tuyau en matière plastique à paroi intérieure lisse, en matière thermoplastique souple ou en élastomère thermoplastique ou thermodurcissable, et un dispositif de maintien, entourant ladite portion (3) de tuyau souple, constitué d'une matière plastique rigide et formé d'une pluralité d'anneaux (4) ou d'au moins une spire hélicoïdale, lesdites matières plastiques étant choisies de manière à être chimiquement compatibles de façon à assurer un ancrage dudit dispositif de maintien dans la surface externe de ladite portion (3) de tuyau souple,
**caractérisé en ce que** l'ancrage dudit dispositif de maintien (4) et éventuellement desdits manchons rigides (2) à emboîture femelle ou bout mâle dans la surface externe de ladite portion (3) du tuyau on matière plastique souple est réalisé par interfusion des matières plastiques souple et rigide utilisées dans une opération de co-injection dans un même moule.

2. Raccord hydraulique selon la revendication 1,
**caractérisé en ce que** lesdits manchons rigides (2) à emboîture femelle ou bout mâle et ledit dispositif de maintien (4) sont constitués de la même matière plastique rigide.

3. Raccord hydraulique selon l'une des revendications 1 et 2,
**caractérisé en ce que** la matière plastique souple est choisie parmi les élastomères thermodurcissables du type EPDM ou thermoplastiques, du type PVC souple ou polybutène souple, éventuellement mélangés avec des additifs.

4. Raccord hydraulique selon l'une quelconque des revendications 1 à 3,
**caractérisé en ce que** la matière plastique rigide est choisie parmi les thermoplastiques tels que le polypropylène, le 15 polyéthylène, le PVC rigide, l'ABS ou le polybutène rigide, éventuellement mélangés avec dos additifs.

5. Raccord hydraulique selon l'une quelconque des revendications 3 et 4,
**caractérisé en ce que** les matières plastiques rigides et souples sont compatibles entre elles, chacune de ces matières étant éventuellement mélangés avec des additifs.

6. Raccord hydraulique selon l'une quelconque des revendications 1 à 5,
**caractérisé en ce qu'**il comprend au moins deux manchons rigides (2) à emboîture femelle ou bout mâle à coller ou qu'il comprend au moins un dispositif d'étanchéité (5) inclus dans chaque manchon (2) à emboîture femelle.

7. Raccord hydraulique selon la revendication 6,
**caractérisé en ce que** ledit dispositif d'étanchéité (5) est un joint à lèvres constitué majoritairement d'une matière plastique souple de même nature que celle constituant ladite portion (3) du tuyau souple.

8. Raccord hydraulique selon l'une quelconque des revendications 6 et 7,
**caractérisé en ce que** les manchons (2) comprennent au moins un dispositif de guidage longitudinal (6) permettant la limitation des contraintes mécaniques entre ledit dispositif d'étanchéité et le tube à raccorder.

9. Procédé de fabrication d'un raccord hydraulique flexible, tel que raccord d'assainissement, d'évacuation d'eaux sanitaires, usées, pluviales ou sorties de WC, selon l'une quelconque des revendications 1 à 8,
**caractérisé en ce que** l'on forme ladite portion (3) de tuyau souple ainsi que ledit dispositif de maintien (4) et éventuellement lesdits manchons rigides (2) à emboîture femelle ou bout mâle de raccordement d'extrémité dans un moule de co-injection par injection successive desdites matières plastiques chimiquement compatibles.

10. Procédé de fabrication selon la revendication 9, **caractérisé en ce que** la première injection permet de réaliser ledit dispositif de maintien (4) et éventuellement lesdits manchons rigides (2) à emboîture femelle ou bout mâle et la seconde injection permet do réaliser ladite portion (3) dudit tuyau souple.

11. Procédé de fabrication selon l'une quelconque des revendications 9 et 10,
**caractérisé en ce qu'**on injecte au moins un dispositif d'étanchéité (5) solidaire d'un manchon rigide (2) à emboîture femelle simultanément à ladite portion (3) dudit tuyau souple.

## Patentansprüche

1. Flexible Flüssigkeitskupplung, beispielsweise Ableitungsanschluss für Abwasser, Schmutzwasser, Regenwasser oder WC-Abflüsse, mit mindestens einem verformbaren Rohr (1) und mindestens zwei starren, für einen Endanschluss vorgesehenen Einsteckmuffen mit männlichem oder weiblichem Anschluss (2), wobei das genannte verformbare Rohr (1) einen Abschnitt (3) aus einem Kunststoffrohr mit glatter Innenwandung aus einem flexiblen thermoplastischen Material oder aus einem thermoplastischen oder wärmeaushärtenden Elastomer, sowie eine Haltevorrichtung, welche den genannten Abschnitt (3) aus flexiblem Rohr umgibt, aus einem starren Kunststoff besteht und durch eine Mehrzahl von Ringen (4) oder durch mindestens eine spiralförmige Windung gebildet ist, aufweist, wobei die genannten Kunststoffe derart ausgewählt werden, dass sie chemisch kompatibel sind, so dass eine Verankerung der genannten Haltevorrichtung in der Außenoberfläche des genannten Abschnitts (3) aus flexiblem Rohr gewährleistet ist,
**dadurch gekennzeichnet, dass** die Verankerung der genannten Haltevorrichtung (4) und eventuell der genannten starren Einsteckmuffen mit männlichem oder weiblichem Anschluss (2) (2) in der Außenoberfläche des genannten Abschnitts (3) aus dem Rohr aus flexiblem Kunststoff durch Verschmelzung des verwendeten flexiblen Kunststoffs und des verwendeten starren Kunststoffs in einem Vorgang der Koinjektion in ein und dieselbe Form erzielt wird.

2. Flüssigkeitskupplung nach Anspruch 1,
**dadurch gekennzeichnet, dass** die genannten starren Einsteckmuffen mit männlichem oder weiblichem Anschluss (2) und die genannte Haltevorrichtung (4) aus demselben starren Kunststoff gebildet sind.

3. Flüssigkeitskupplung nach einem der Ansprüche 1 und 2,
**dadurch gekennzeichnet, dass** der flexible Kunststoff aus den wärmeaushärtenden Elastomeren des Typs EPDM oder aus den thermoplastischen Elastomeren des Typs flexiblen PVCs oder flexiblen Polybutens ausgewählt wird, denen eventuell Zusatzstoffe beigemengt sind.

4. Flüssigkeitskupplung nach einem der Ansprüche 1 bis 3,
**dadurch gekennzeichnet, dass** der starre Kunststoff aus den thermoplastischen Stoffen wie Polypropylen, Polyethylen 15, starrem PVC, ABS oder starrem Polybuten ausgewählt ist, denen eventuell Zusatzstoffe beigemengt sind.

5. Flüssigkeitskupplung nach einem der Ansprüche 3 und 4,
**dadurch gekennzeichnet, dass** die starren und flexiblen Kunststoffe miteinander kompatibel sind, wobei jedem dieser Stoffe eventuell Zusatzstoffe beigemengt sind.

6. Flüssigkeitskupplung nach einem der Ansprüche 1 bis 5,
**dadurch gekennzeichnet, dass** sie mindestens zwei starre zu klebende Einsteckmuffen mit männlichem oder weiblichem Anschluss (2) oder mindestens eine in jeder Einsteckmuffe (2) enthaltene Abdichtungsvorrichtung (5) aufweist.

7. Flüssigkeitskupplung nach Anspruch 6,
**dadurch gekennzeichnet, dass** die genannte Abdichtungsvorrichtung (5) eine Lippendichtung ist, welche überwiegend aus einem flexiblen Kunststoff derselben Art besteht, wie der Kunststoff, aus dem der genannte Abschnitt (3) aus flexiblem Rohr besteht.

8. Flüssigkeitskupplung nach einem der Ansprüche 6 und 7,
**dadurch gekennzeichnet, dass** die Muffen (2) mindestens eine Vorrichtung zur Längsführung (6) aufweisen, welche die Begrenzung der mechanischen Belastungen zwischen der genannten Abdichtungsvorrichtung und dem anzuschließenden Rohr ermöglicht.

9. Verfahren zur Herstellung einer flexiblen Flüssigkeitskupplung, wie Ableitungsanschluss für Abwasser, Schmutzwasser, Regenwasser oder WC-Abflüsse, nach einem der Ansprüche 1 bis 8,
**dadurch gekennzeichnet, dass** der genannte Abschnitt (3) aus flexiblem Rohr sowie die Haltevorrichtung (4) und eventuell die genannten starren für einen Endanschluss vorgesehenen Einsteckmuffen mit männlichem oder weiblichem Anschluss (2) in einer Koinjektions-Form durch aufeinander folgende Einspritzung der genannten chemisch kompatiblen Kunststoffe gebildet werden.

10. Herstellungsverfahren nach Anspruch 9,
**dadurch gekennzeichnet, dass** die erste Einspritzung die Ausbildung der genannten Haltevorrichtung (4) und eventuell der genannten starren Einsteckmuffen mit männlichem oder weiblichem Anschluss (2) ermöglicht und die zweite Einspritzung die Ausbildung des genannten Abschnitts (3) des genannten flexiblen Rohrs ermöglicht.

11. Herstellungsverfahren nach einem der Ansprüche 9 und 10,
**dadurch gekennzeichnet, dass** mindestens eine Abdichtungsvorrichtung (5), welche mit einer starren Einsteckmuffe (2) fest verbunden ist, gleichzeitig mit dem genannten Abschnitt (3) des genannten flexiblen Rohrs gespritzt wird.

## Claims

1. Flexible hydraulic connection, such as a drainage connection for the evacuation of sanitary water, waste water and rainwater or for WC outlets, said connection comprising at least one deformable tube (1) and at least two rigid sleeves (2) with a female socket or a male connecting end tip, said deformable tube (1) comprising a portion (3) of a pipe which is formed from plastics material and has a smooth interior wall, or is formed from supple thermoplastic material or from thermoplastic or heat-hardenable elastomeric material, and a retaining means which surrounds said supple pipe portion (3), is composed of a rigid plastics material and is formed by a plurality of rings (4) or by at least one helicoidal winding, said plastics materials being selected so as to be chemically compatible in order to ensure an anchoring of said retaining means in the external surface of said supple pipe portion (3), **characterised in that** the anchoring of said retaining means (4), and possibly of said rigid sleeves (2) with a female socket or a male tip, in the external surface of said portion (3) of the pipe formed from supple plastics material is achieved by the interfusion of the supple and rigid plastics materials used in a co-injection operation in one and the same mould.

2. Hydraulic connection according to claim 1, **characterised in that** said rigid sleeves (2) with a female socket or a male tip and said retaining means (4) are composed of the same rigid plastics material.

3. Hydraulic connection according to one of claims 1 and 2, **characterised in that** the supple plastics material is selected from amongst heat-hardenable elastomeric materials of the EPDM type or thermoplastic elastomeric materials of the supple PVC type or of the supple polybutene type, possibly mixed with additives.

4. Hydraulic connection according to any of claims 1 to 3, **characterised in that** the rigid plastics material is selected from amongst thermoplastic materials such as polypropylene, 15 polyethylene, rigid PVC, ABS or rigid polybutene, possibly mixed with additives.

5. Hydraulic connection according to any of claims 3 and 4, **characterised in that** the rigid and supple plastics materials are compatible with one another, each of these materials possibly being mixed with additives.

6. Hydraulic connection according to any of claims 1 to 5, **characterised in that** it comprises at least two rigid sleeves (2) with a female socket or a male tip to be glued, or **in that** it comprises at least one sealing means (5) included in each sleeve (2) with a female socket.

7. Hydraulic connection according to claim 6, **characterised in that** said sealing means (5) is a lip joint composed mainly of a supple plastics material of the same nature as that forming said portion (3) of the supple pipe.

8. Hydraulic connection according to any of claims 6 and 7, **characterised in that** the sleeves (2) comprise at least one longitudinal guiding means (6), which permits the limitation of the mechanical stresses between said sealing means and the tube to be connected.

9. Method of manufacturing a flexible hydraulic connection, such as a drainage connection for the evacuation of sanitary water, waste water and rainwater or for WC outlets, according to any of claims 1 to 8, **characterised in that** said supple pipe portion (3) as well as said retaining means (4) and possibly said rigid sleeves (2) with a female socket or a male connecting end tip are formed in a co-injection mould by injecting successively said chemically compatible plastics materials.

10. Manufacturing method according to claim 9, **characterised in that** the first injection permits said retaining means (4), and possibly said rigid sleeves (2) with a female socket or male tip, to be obtained, and the second injection permits said portion (3) of said supple pipe to be obtained.

11. Manufacturing method according to any of claims 9 and 10, **characterised in that** at least one sealing means (5), which is integral with a rigid sleeve (2) having a female socket, is injected simultaneously with said portion (3) of said supple pipe.
